**Europäisches Patentamt**

**European Patent Office**

**Office européen des brevets**

(19)

(11) Numéro de publication: **0 227 771 B1**

(12) **FASCICULE DE BREVET EUROPEEN**

(45) Date de publication du fascicule du brevet: **29.08.90**

(51) Int. Cl.⁵: **B 01 D 53/04,** C 01 B 31/20

(21) Numéro de dépôt: **86904210.1**

(22) Date de dépôt: **04.07.86**

(86) Numéro de dépót international:
**PCT/FR86/00240**

(87) Numéro de publication internationale:
**WO 87/00076 15.01.87 Gazette 87/01**

(54) **PROCEDE DE TRAITEMENT D'UN MELANGE GAZEUX PAR ADSORPTION.**

(30) Priorité: **08.07.85 FR 8510405**

(43) Date de publication de la demande:
**08.07.87 Bulletin 87/28**

(45) Mention de la délivrance du brevet:
**29.08.90 Bulletin 90/35**

(84) Etats contractants désignés:
**AT BE CH DE FR GB IT LI LU NL SE**

(56) Documents cités:
**EP-A-0 083 832**
**EP-A-0 108 005**
**FR-A-2 270 927**
**US-A-4 512 780**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **HAY, Léon**
**19, rue de la Vistule**
**F-75013 Paris (FR)**

(74) Mandataire: **Sadones Laurent, Renée et al**
**L'AIR LIQUIDE 75, quai d'Orsay**
**F-75321 Paris Cédex 07 (FR)**

Courier Press, Leamington Spa, England.

EP 0 227 771 B1

**Description**

La présente invention est relative à un procédé de récupération par adsorption d'au moins un constituant préférentiellement adsorbable d'un mélange gazeux. Elle s'applique notamment à la production de mélanges à au moins 95% de $CO_2$ (anhydride carbonique) à partir de mélanges gazeux n'en contenant que 10 à 30% environ.

L'invention a pour but de permettre d'extraire le $CO_2$ de sources pauvres telles que les gaz de fumées de cimenteries ou de chaudières, les gaz de décharges, les gaz sidérurgiques provenant de procédés par réduction directe ou les biogaz, avec un bon rendement d'extraction et une taible dépense d'énergie. A cet effet, l'invention a pour objet un procédé de récupération par adsorption d'au moins un constituant préférentiellement adsorbable d'un mélange gazeux, ce procédé mettant un oeuvre au moins deux adsorbeurs et étant caractérisé par le cycle opératoire exposé dans le revendication 1.

Plusieurs exemples de mise en oeuvre de l'invention vont maintenant être décrits en regard des dessins annexés, sur lesquels:

la figure 1 est un diagramme illustrant un procédé conforme à l'invention et mettant en oeuvre deux adsorbeurs;

la figure 2 représente schématiquement une installation permettant la mise en oeuvre de ce procédé;

la figure 3 est und diagramme illustrant un procédé conforme à l'invention et mettant en oeuvre trois adsorbeurs;

la figure 4 représente schématiquement une installation permettant la mise en oeuvre du procédé de la figure 3;

les figures 5 à 7, 9 et 11 sont des diagrammes illustrant respectivement cinq procédés conformes à l'invention et mettant en oeuvre quatre adsorbeurs;

la figure 8 représente schématiquement une installation permettant la mise en oeuvre des procédés des figures 5 à 7;

la figure 10 représente schématiquement une installation permettant la mise en oeuvre des procédé de la figure 9; et

la figure 12 représente schématiquement une installation permettant la mise en oeuvre du procédé de la figure 11.

Dans tous les exemples décrits ci-dessous, on suppose qu'on traite un mélange gazeux disponible au voisinage de la pression atmosphérique; pour des raisons économiques, on le traite par adsorption à une pression seulement légèrement supérieure à la pression atmosphérique, en utilisant une soufflante ou un ventilateur pour assurer sa circulation. Ainsi, le cycle évolue entre une pression haute légèrement supérieur à la pression atmosphérique et une pression basse constituant un vide relatif, par exemple de l'ordre de 0,1 bar.

Le gaz traité contient 10 à 30% de $CO_2$ et 70 à 90% de constituants divers ($N_2$, $O_2$ CO, ...). L'adsorbant utilisé est un charbon actif, done la propriété est d'adsorber préférentiellement le $CO_2$ par rapport aux autres constituants principaux du mélange.

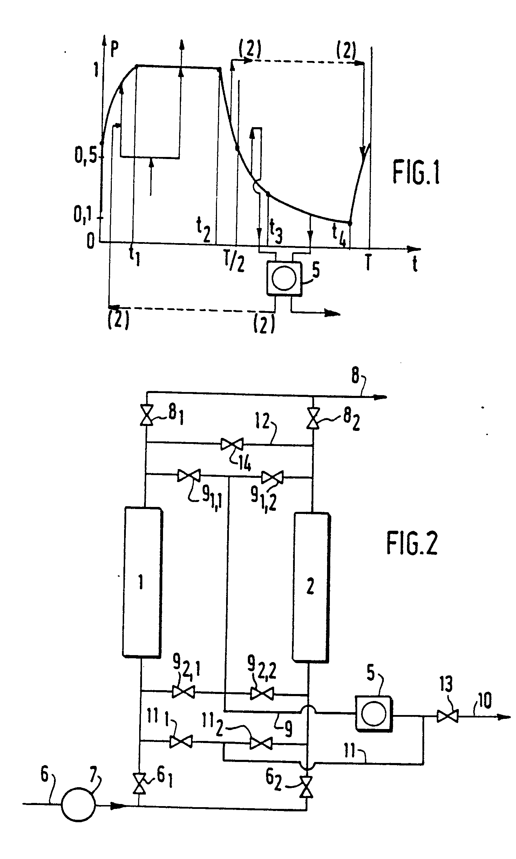

Sur chacun des diagrammes des figures 1, 3, 5 à 7, 9 et 11, on a porté le temps $t$ en abscisses et la pression P (en bar absolu) en ordonnées. Si le procédé met en oeuvre $n$ adsorbeurs ($n$ = 2, 3 ou 4), ces adsorbeurs sont numémerotés de 1 à $n$, et la courbe représente la variation de la pression dans l'adsorbeur 1 au cours d'un cycle complet de durée T. Cette période est divisée en $n$ sous-périodes de durée

$$\frac{T}{n},$$

et le fonctionnement de l'adsorbeur $i$ se déduit de celui représenté par décalage de la courbe vers la droite de

$$(i-1) \times \frac{T}{n}.$$

Dans les exemples illustrés, la durées des cycles est par exemple de l'ordre de $n$ fois quelques minutes.

Sur les diagrammes précités, les traits orientés par des flèches indiquent les mouvements et destinations des courants gazeux; lorsque les flèches sont parallèles à l'axe des ordonnées, elles indiquent, en outre, le sens de circulation dans un adsorbeur: lorsqu'une flèche est dens le sens ordonnées croissantes (vers le haut du diagramme) le courant est dit à co-courant, dans l'adsorbeur; si la flèche dirigée vers le haut est située au-dessous du trait indiquant la pression dans l'adsorbeur, le courant pénètre dans l'adsorbeur par l'extrémité d'entrée de l'adsorbeur; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en phase d'adsorption isobare; lorsqu'une flèche est dans le sens des ordonnées décroissantes (vers le bas du diagramme), le courant est dit à contre-courant, dans l'adsorbeur. Si la flèche dirigée vers les bas est située au-dessous du trait indiquant la pression de l'adsorbeur, le courant sort de l'adsorbeur par l'extrémité d'entrée de l'adsorbeur, si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase d'adsorption isobare. D'autre part, on a indiqué en traits pleins les courants gazeux qui concernent exclusivement l'adsorbeur 1 et en traits pointillés les courants gazeux en provenance ou en direction d'autres adsorbeurs, dont les numéros sont indiqués sur le diagramme.

Ainsi, sur la figure 1, qui illustre un procédé mettant en oeuvre deux adsorbeurs 1 et 2, le cycle comprend, pour l'adsorbeur 1:

de t = 0 à $t_1$, une étape finale de remontée en pression de 0,6 bar environ à environ 1 bar;

de $t_1$ à $t_2$, une phase d'adsorption isobare à co-courant;

de

$$t_2 \text{ de } \frac{T}{2},$$

une première étape de mise en dépression par équilibrage avec l'adsorbeur 2;

de

$$\frac{T}{2} \text{ à } t_3,$$

une seconde étap de mise en dépression par pompage à co-courant, au moyen d'une pomp'e à vide 5, jusqu'à une pression intermédiaire de l'ordre de 0,3 bar;

de $t_3$ à $t_4$, une troisième étape de mise en dépression par pompage à contre-courant, au moyen de la même pompe 5, jusqu'à la pression basse du cycle, de l'ordre de 0,1 bar; et

une première étape de remontée en pression, jusqu'à environ 0,6 bar, par équilibragea avec l'adsorbeur 2, ce qui impose la relation:

$$T - t_4 = \frac{T}{2} - t_2.$$

En ce qui concerne les flux gazeux:

de t = 0 à $t_2$, du mélange à traiter est admis dans l'adsorbeur 1;

de t = 0 à $t_1$, le gaz pompé au cours du pompage à co-courant de l'adsorbeur 2 est recyclé et ajouté au mélange à traiter, soit directement à partir du refoulement de la pompe à vide 5, si la pression de refoulement de cette pompe convient, soit en renvoyant ce gaz à l'aspiration de la soufflante. La relation

$$t_3 - \frac{T}{2} = t_1$$

est vérifiée;

de t = 0 à $t_1$, aucun flux gazeux ne sort de l'adsorbeur 1. Par contre, de $t_1$ à $t_2$, un gaz résiduaire, appauvri en $CO_2$, est soutiré par l'extrémité de sortie de l'adsorbeur 1 et mis à l'air, tandis que cet adsorbeur se charge préférentiellement en $CO_2$; en d'autres termes, au cours de cette phase d'adsorption, le $CO_2$ est arrêté sur l'adsorbant et sa concentration à l'état coadsorbé avec les autres constituants du mélange est plus élevée que sa teneur dans le mélange initial;

de

$$t_2 \text{ à } \frac{T}{2},$$

l'adsorbeur 1 se décomprime à co-courant, ce que a pour effet d'éliminer préférentiellement les constituants autres que le $CO_2$, moins adsorbés que ce dernier, présents dans l'adsorbeur en fin d'adsorption sous une pression partielle plus importante que celle du $CO_2$. Cette fraction pauvre en $CO_2$ est utilisée pour repressuriser partiellement à contre-courant l'autre adsorbeur en situation de basse pression (phase d'équilibrage de pressions);

de

$$\frac{T}{2} \text{ à } t_3,$$

le pompage à co-courant a pour effet, comme la phase d'équilibrage précédente, d'augmenter encore la concentration en $CO_2$ de l'adsorbeur, en le purgeant des autres constituants, le gaz produit par ledit pompage à co-courant est recyclé en totalité vers l'extrémité d'entrée du second adsorbeur pendant l'étage allant de t = 0 à $t_1$;

de $t_3$ à $t_4$, le pompage à contre-courant fournit un gaz dont la teneur moyenne en $CO_2$ est au moins égale à 95%.

On voit que, suivant ce procédé, le pompage de l'adsorbeur s'effectue en deux temps fournissant deux fractions séparées, la première obtenue par circulation à co-courant pour extraire une fraction enrichie en $CO_2$ mais insuffisamment concentrée, la seconde à contre-courant pour extraire la fraction à teneur désirée en $CO_2$ assurant la production.

Des essais comportant un premier pompage jusqu'à 0,55 bar et un second pompage jusqu'à 0,15 bar ont fourni, sans recyclage de la première fraction pompée, une première fraction enrichie à environ 30% de $CO_2$, et une seconde fraction à environ 95% de $CO_2$, avec un rendement d'extraction, pour cette seconde fraction, de 66%. Le fait que la première fraction soit riche en $CO_2$ que le mélange initial explique l'intérêt du recyclage de cette fraction vers l'entrée de l'autre adsorbeur, ce qui augmente encore le rendement d'extraction en $CO_2$.

L'installation de la figure 2 permet de mettre en oeuvre le procédé de la figure 1. Elle comprend, outre les adsorbeurs 1 et 2 et la pompe 5, une ligne 6 d'admission du mélange à traiter, équipée d'une soufflante ou d'un ventilateur 7, une ligne 8 de mise à l'air du gaz résiduaire, une ligne 9 de pompage reliée à l'aspiration de la pompe 5, une ligne de production 10 et une ligne de recyclage 11 reliées à la sortie de cette pompe, et une ligne d'équilibrage 12.

La ligne 6 est reliée à l'entrée des adsorbeurs 1 et 2 par l'intermédiaire de vannes respectives $6_1$ et $6_2$, la ligne 8 à leurs sorties par l'intermédiaire de vannes $8_1$ et $8_2$, la ligne 9 aux mêmes sorties par l'intermédiaire de vannes $9_{1,1}$ et $9_{1,2}$ et aux entrées des adsorbeurs par l'intermédiaire de vannes $9_{2,1}$ et $9_{2,2}$; la ligne 11 est reliée aux entrées des adsorbeurs par l'intermédiaire de vannes $11_1$ et $11_2$, la ligne de production 10 comporte une vanne 13 et la ligne d'équilibrage relie entre elles les sorties des deux adsorbeurs et comporte une vanne 14. On comprend facilement comment, par le jeu des différentes vannes, on peut obtenir le cycle illustré à la figure 1.

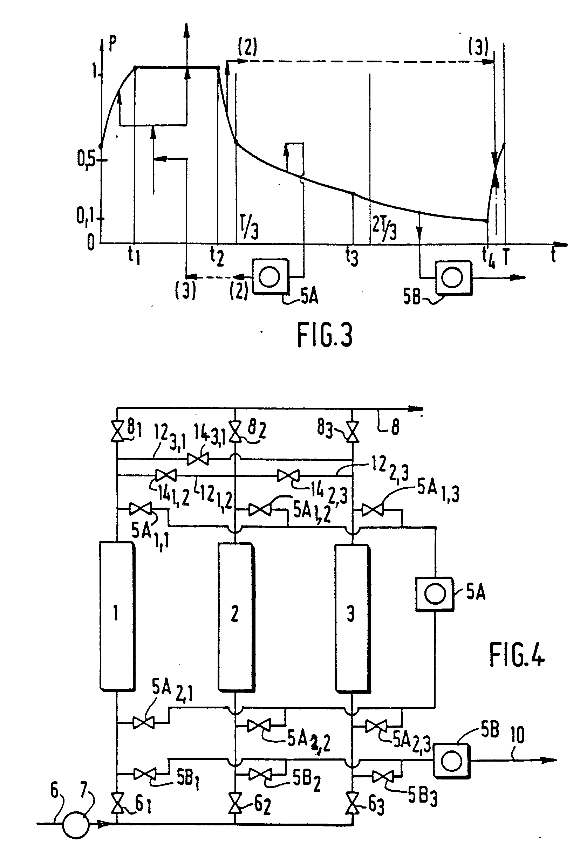

La figure 3 illustre en procédé qui met en oeuvre trois adsorbeurs 1 à 3 dont chacun subit comme précédemment et cycliquement les phases d'asorption isobare sous environ 1 bar, de première décompression par équilibrage, de premier pompage à co-courant avec recyclage total du gaz pompe vers l'extrémité d'entrée d'un autre adsorbeur pendant au moins une partie de la phase (a) de ce dernier, de second pompage à contre-courant fournissant le gaz de production, et de remontée en pression d'abord par équilibrage puis par admission du mélange à traiter. Dans ce cas, cependant, on utilise deux pompes à vide 5A et 5B affectées chacune à l'une des deux opérations de pompage. Plus précisément, en considérant l'adsorbeur 1:

de t = 0 à $t_1$, du mélange à traiter auquel est ajoutée la première fraction pompée provenant de l'adsorbeur 3 pénètre par l'entrée de l'adsorbeur 1 pour l'amener de 0,6 bar environ à 1 bar environ;

de $t_1$ à $t_2$, le même gaz circule à co-courant à travers l'adsorbeur, et le gaz résiduaire est mis à l'air;

de

$$t_2 \text{ à } \frac{T}{2},$$

première décompression à co-courant par équilibrage, jusqu'a 0,6 bar environ, le gaz évacué étant envoyé à contre-courant dans l'adsorbeur 2 en situation de basse pression;

de

$$\frac{T}{3} \text{ à } t_3 \ (t_3 < \frac{2T}{3}),$$

premier pompage, à co-courant, par la pompe 5A, jusqu'a environ 0,3 bar, le gaz pompé étant recyclé en totalité vers l'entrée de l'adsorbeur 2;

de $t_3$ à $t_4$, second pompage, à contre-courant, par la pompe 5B, jusqu'à environ 0,1 bar, pour fournir le gaz de production; et

de $t_4$ à T, première remontée en pression jusqu'à 0,6 bar, par équilibrage avec l'adsorbeur 3, le gaz étant introduit à contre-courant dans l'adsorbeur 1.

Les relations suivantes sont vérifiées:

$$T_3 - t_2 = T - t_4;$$

$$t_3 - t_2 = t_4 - t_3 = \frac{T}{3}.$$

Ainsi, la pompe 5B fonctionne en continu, ce qui est avantageux du point de vue énergétique, et le recyclage de la première fraction pompée s'effectue sur la totalité de la phase d'adsorption. Si, de plus, comme indiqué en traits mixtes à la figure 3, le mélange à traiter est admis à co-courant dans l'adsorbeur 1 également pendant la phase de première remontée en pression (de $t_4$ à T), la soufflante travaille elle aussi en continu.

L'installation de la figure 4 permet de réaliser le cycle de la figure 3. Avec des notations analogues à celles de la figure 2:

la ligne 6 est reliée à l'entrée des adsorbeurs par l'intermédiaire de vannes respectives $6_1$, $6_2$, $6_3$, et la ligne 8 à leurs sorties par l'intermèdiaire de vannes $8_1$, $8_2$, $8_3$;

l'aspiration de la pompe 5A est reliée à la sortie des adsorbeurs par l'intermédiaire de vannes $5A_{1,1}$, $5A_{1,2}$, $5A_{1,3}$, et son refoulement à l'entrée des adsorbeurs par l'intermédiaire de vannes $5A_{2,1}$, $5A_{2,2}$, $5A_{2,3}$;

l'aspiration de la pompe 5B est reliée à l'entrée des adsorbeurs par l'intermédiaire de vannes $5B_1$, $5B_2$, $5B_3$;

il est prévu trois lignes d'équilibrage $12_{1,2}$, $12_{2,3}$, $12_{3,1}$ équipées de vannes respectives $14_{1,2}$, $14_{2,3}$, $14_{3,1}$.

On remarque que puisque la pompe 6B fonctionne en continu, il n'est plus prévu de vanne sur la conduite de production 10.

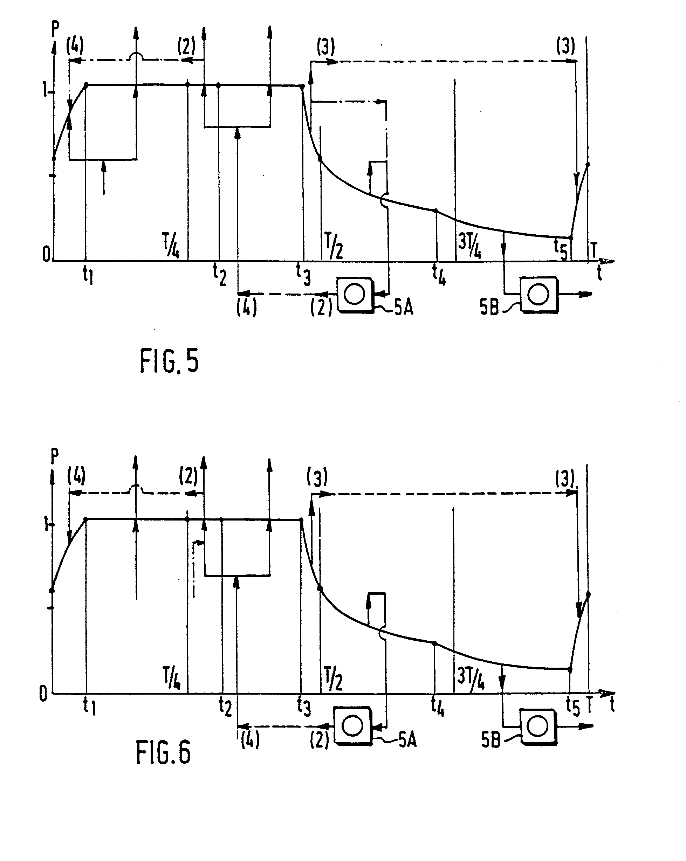

La figure 5 illustre un procédé mettant en oeuvre quatre adsorbeurs 1 à 4 dont chacun subit cycliquement les mêmes phases que précédemment, avec utilisation de deux pompes à vide 5A et 5B. Plus précisément, on a, en considérant l'adsorbeur 1:

de t = 0 à $t_1$: fin de remontée en pression, de 0,6 bar environ à 1 bar environ, par admission du mélange à traiter par l'entrée de l'adsorbeur;

de

$$t_1 \text{ à } \frac{T}{4}:$$

phase d'adsorption isobare avec circulation à co-courant du mélange et mise à l'air du gaz résiduaire;

de

$$\frac{T}{4} \text{ à } t_3 < \frac{T}{2}:$$

circulation à co-courant de la première fraction pompée de l'adsorbeur 4 et recyclée;

de

$$t_3 \text{ à } \frac{T}{2}:$$

première décompression à co-courant par équilibrage jusqu'à environ 0,6 bar, le gaz issu de la sortie de l'adsorbeur 1 étant introduit à contre-courant dans l'adsorbeur 3;

de

$$\frac{T}{2} \text{ à } t_4 < \frac{3T}{4}:$$

premier pompage à co-courant jusq'à 0,3 bar environ, la fraction pompée étant recyclée en totalité vers l'entrée de l'adsorbeur 2;

de $t_4$ à $t_5$: second pompage à contre-courant jusqu'a 0,1 bar environ, fournissant le gaz de production; et

de $t_5$ à T: première remontée en pression jusqu'à 0,6 bar environ par équilibrage à contre-courant avec du gaz provenant de l'adsorbeur 3.

Les relations suivants sont vérifiées:

$$T - t_5 = \frac{T}{2} - t_3;$$

$$t_4 - t_3 = t_5 - t_4 = \frac{T}{4}.$$

Ainsi, dans le procédé de la figure 5, chaque adsorbeur traite d'abord du mélange

$$\text{(de } t_1 \text{ à } \frac{T}{4}),$$

puis la totalité de la première fraction recyclée en provenance d'une autre adsorbeur, fraction qui est plus riche en $CO_2$ que le mélange initial.

La figure 5 illustre en traits mixtes deux variantes possibles de ce cycle:

(a) du temps t = 0 au temps $t_1$, c'est-à-dire pendant la seconde étape de remontée en pression, l'adsorbeur 1 reçoit en outre par sa sortie, à contre-courant, du gaz résiduaire issu de l'adsorbeur 4. De même, du temps

$$\frac{T}{4}$$

au temps $t_2$ tel que

$$t_2 - \frac{T}{4} = t_1,$$

tout ou partie du gaz résiduaire issue de la sortie de l'adsorbeur 1 est envoyé à contre-courant dans l'adsorbeur 2. Ainsi, chaque adsorbeur, étant alimenté de t = 0 à $t_1$ à la fois par du mélange à traiter et par du gaz résiduaire, est ramené plus rapidement à la pression haute du cycle avant le début de la phase d'adsorption;

(b) la phase d'équilibrage est accomagnée du début de la première étape de pompage à co-courant. Ceci permet de faire fonctionner en continu non seulement la soufflante d'introduction du mélange et la pompe 5B, mais également la pompe 5A, ce qui est avantageux du point de vue énergétique. Dans ce cas, la pression descend plus rapidement de

$$t_3 \text{ à } \frac{T}{2},$$

et la pression d'équilibrage est inférieure à la valeur 0,6 bar indiquée plus haut.

Le cycle illustré à la figure 6 ne diffère de la variante (a) du cycle de la figure 5 que par le fait que la seconde étape de remontée en pression s'effectue entièrement par introduction à contre-courant, de t = 0 à $t_1$, du gaz résiduaire produit par l'adsorbeur 4 de

$$\frac{T}{4} \text{ à } t_2.$$

Par suite, l'introduction du mélange à traiter s'effectue de façon entièrement isobare, à la pression haute du cycle, uniquement pendant la phase d'adsorption de ce mélange, soit de

$$t_1 \text{ à } \frac{T}{4}.$$

Dans ce cas, pour assurer de nouveau un fonctionnement continu de la soufflante, on peut poursuivre l'admission du mélange jusqu'au temps $t_2$, comme indiqué en traits mixtes à la figure 6.

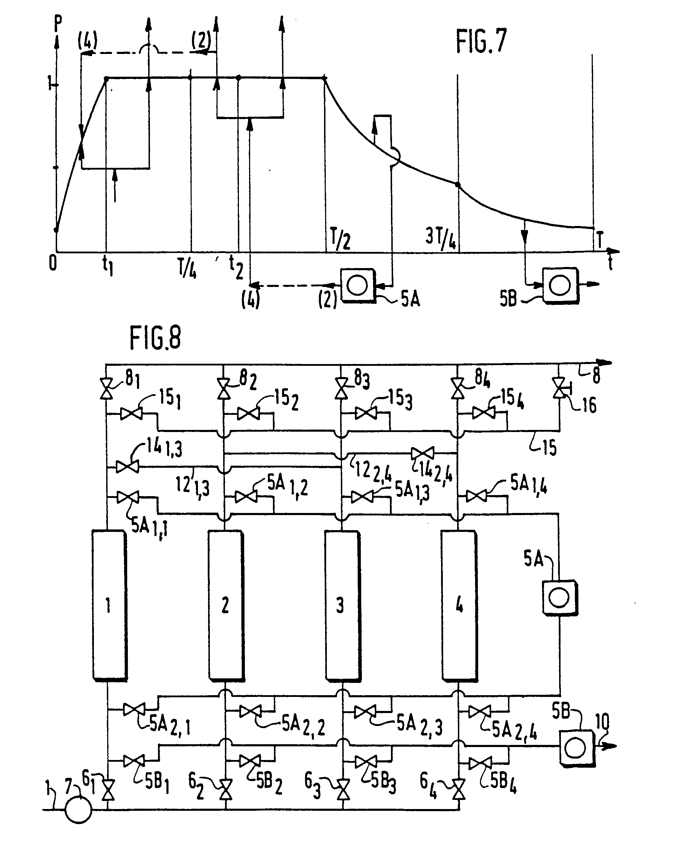

Le cycle illustré à la figure 7 ne diffère de la variante (a) du cycle de la figure 5 que par la suppression de la phase d'équilibrage, c'est-à-dire que l'adsorption isobare de la première fraction recyclée provenant de l'adsorber 4 se poursuit, à la pression haute du cycle, de

$$\frac{T}{4} \text{ à } \frac{T}{2}.$$

Par conséquent, la totalité de la remontée en pression, de la pression basse à la pression haute du cycle, s'effectue par introduction simultanée d'une part du mélange à traiter par l'entrée de l'adsorbeur, et d'autre part des gaz résiduaires provenant de l'adsorbeur 4 par la sortie de l'adsorbeur 1. Le pompage à co-courant a lieu de

$$\frac{T}{2} \text{ à } \frac{3T}{4},$$

et le pompage à contre-courant de

$$\frac{3T}{4}$$

à T. Ce cycle permet de faire fonctionner en continue la soufflante et les pompes 5A et 5B.

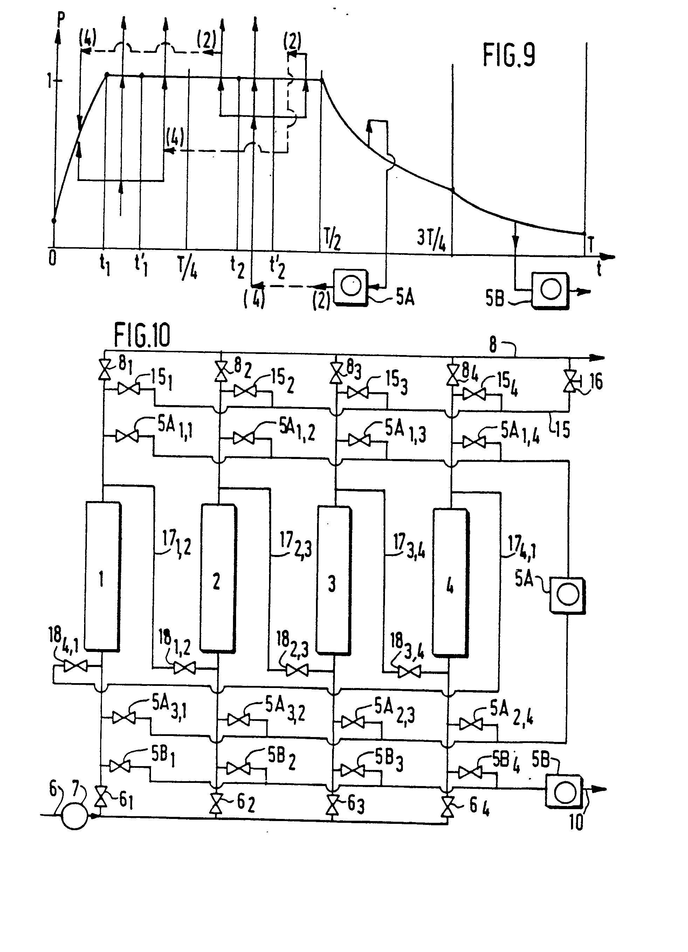

L'installation schématisée à la figure 8 permet de mettre en ouuvre les cycles illustrés aux figures 5 à 7.

En ce qui concerne le cycle de la figure 7, dépourvu d'étape d'équilibage, et avec des notations analogues à celles de la figure 4, on retrouve les lignes 6, 8, 10 et es pompes 5A et 5B les mêmes liaisons que précédemment. L'installation comporte en outre une ligne 15, équipée d'un organe 16 de commande de débit, qui parte de la ligne 8 et permet de renvoyer le gaz résiduaire, par l'intermédiaire de vannes respectives $15_1$ à $15_4$, vers la sortie de chaque adsorbeur 1 à 4, pour effectuer la remontée en pression.

La même installation peut être utilisée pour mettre en oeuvre les cycles des figures 5 et 6 en y ajoutant deux lignes d'équilibrage $12_{1,2}$ et $12_{2,4}$, équipées de vannes $14_{1,3}$ et $14_{2,4}$, reliant les sorties des adsorbers 1 et 3 d'une part, 2 et 4 d'autre part.

Le cycle illustré à la figure 9 ne diffère de celui de la figure 7 que par le fait que, dans une étape finale de l'adsorption isobare du mélange à traiter

$$(\text{de } t'_1 \text{ à } \frac{T}{4}),$$

on adjoint à ce mélange, avant son entrée dans l'adsorbeur 1, du gas résiduaire (par exemple, comme représenté, la totalité de ce gaz) provenant de l'adsorbeur 4, lequel se trouve en fin d'adsorption de la première fraction recyclée en provenance de l'adsorbeur 3

$$(\text{de } t'_2 \text{ à } \frac{T}{4}).$$

Corrélativement, de

$$t'_2 \text{ à } \frac{T}{2},$$

le gaz résiduaire issu de l'adsorbeur 1 est recyclé de façon analogue vers l'adsorbeur 2.

Ce second recyclage est intéressant lorsque la teneur en $CO_2$ du gaz ainsi recyclé est suffisamment importante, à savoir supérieure à celle du mélange à traiter, ce qui suppose que l'on extrait nettement le front de $CO_2$ de l'adsorbeur vers la fun de la phase isobare, pour préconcentrer l'adsorbeur en $CO_2$ avant sa décompression.

Grâce aux deux recyclages utilisé, on améliore la qualité de la production de $CO_2$, c'est-à-dire la teneur en $CO_2$ du gaz de production, tout en maintenant son rendement d'extraction à un niveau élevé.

L'installation schématisée à la figure 10 permet de réaliser le cycle de la figure 9. Elle est analogue à celle de la figure 8, sans les lignes d'équilibrage $12_{1,3}$ et $12_{2,4}$ mais avec en outre quatre conduites de second recyclage $17_{1,2}$, $17_{2,3}$, $17_{3,4}$, $17_{4,1}$ équipées de vannes respective $18_{1,2}$, $18_{2,3}$, $18_{3,4}$, $18_{4,1}$.

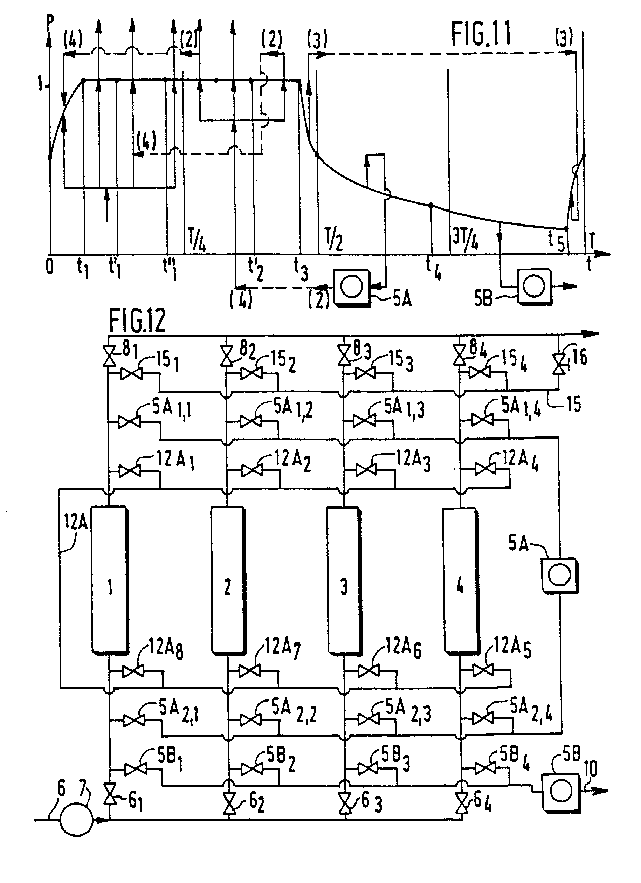

On retrouve dans le cycle de la figure 11 les deux recyclages de la figure 8, mais dans le cadre d'un procédé avec équilibrage du type de la variante (a) de la figure 5. Du tait de la première décompression par équilibrage de

$$t_3 \text{ à } \frac{T}{2},$$

le second recyclage du gaz résiduaire en fin de phase isobare a lieu, à l'admission, entre deux instants t' et $t''_1$ antérieurs à

$$\frac{T}{4},$$

avec

$$\frac{T}{4} - t''_1 = \frac{T}{2} - t_3$$

et $t''_1 - t'_1 = t_3 - t'_2$.

On remarque sur la figure 11 que comme le gaz résiduaire est, en fin de phase isobare, plus riche en $CO_2$ que le mélange à traiter, la décompression par équilibrage s'effectue en envoyant le gaz de la sortie de l'adsorbeur 1 vers l'entrée de l'adsorbeur 3, en d'autres termes, la première remontée en pression par équilibrage, de $t_5$ à T, a lieu par introduction de gaz à co-courant, et non plus à contre-courant comme dans les cycles à équilibrage précédemment décrits.

L'installation schématisée à la figure 12 permet de mettre en oeuvre le cycle de la figure 11. Elle ne diffère de l'installation de la figure 8 que par le fait que lignes d'équilibrage $12_{1,3}$ et $12_{2,4}$ de cette dernière sont remplacées par une ligne unique 12A qui permet, grâce à huit vannes $12A_1$ à $12A_8$, de mettre en communication l'entrée ou la sortie de n'importe quel adsorbeur avec l'entrée ou la sortie de n'importe quel autre adsorbeur. En manoeuvrant oes vannes de façon appropriée, on comprend qu'on peut ainsi effectuer les recyclages de gaz résiduaire et les équilibrages avec remontée en pression à co-courant décrits plus haut.

Sous ses différentes formes décrites ci-dessus, le procédé suivant l'invention est particulièrement applicable à la récupération de $CO_2$ à partir de sources pauvres, c'est-à-dire ne contenant que 10 à 30% environ de $CO_2$. D'une manière générale, le procédé est applicable à la récupération d'un ou plusieurs constituants les plus adsorbables d'un mélange, commme par exemple, à la récupération d'un gaz actif qui se trouve dilué dans son utilisation.

## Revendications

1. Procédé de récuperation par adsorption PSA d'au moins un constituant préférentiellement adsorbable d'un mélange gazeux, ce procédé mettant en oeuvre au moins deux absorbeurs et étant caractérisé par le cycle opératoire suivant:

(a) une phase d'adsorption comprenant au moins une étape initiale à pression croissante au cours de laquelle du mélange à traiter est admis dans un premier adsorbeur par une première extrémité, dite extrémité d'entrée, de l'adsorbeur, et une étape finale isobare à une pression haute du cycle au cours de laquelle du gaz est admis dans l'adsorbeur par sa première extrémité et circule à travers l'adsorbeur, un soutirage étant effectué par son autre extrémité, dite extrémité de sortie, le sens de circulation étant appelé co-courant;

(b) une première phase de décompression de l'adsorbeur à co-courant, jusqu'à une pression moyenne du cycle, le gaz extrait de l'adsorbeur au cours d'une étape finale de cette phase (b) étant plus riche en ledit constituant que le mélange de départ mais moins riche en ce constituant que le gaz de production désiré et étant recyclé en totalité vers l'extrémité d'entrée d'un autre adsorbeur pendant au moins une partie de la phase (a) de ce dernier, de sortie que le gaz admis à co-courant dans l'adsorbeur en phase (a) est au moins aussi riche en ledit constituant que ledit mélange gazeux pendant toute la phase (a) et est plus riche que ce mélange pendant au moins une partie de cette phase;

(c) une seconde phase de décompression de l'adsorbeur à contre-courant, jusqu'à une pression basse du cycle, le gas soutiré au cours de cette phase étant en totalité le gaz de production; et éventuellement

(d) une phase de remontée en pression du premier adsorbeur.

2. Procédé suivant la revendication 1, caractérisé en ce que le phase (b) comprend une étape initiale d'équilibrage de pressions entre l'adsorbeur subissant cette phase (b) et un second adsorbeur en début de phase (d).

3. Procédé suivant la revendication 2, caractérisé en ce que le gaz issu du premier adsorbeur est admis dans le second adsorbeur à contre-courant pendant la phase d'équilibrage.

4. Procédé suivant la revendication 2, caractérisé en ce que le gaz issu du premier adsorbeur est admis dans le second adsorbeur à co-courant pendant la phase d'équilibrage.

5. Procédé suivant l'une quelconque des revendications 2 à 4, caractérisé en ce que du mélange à traiter est introduit à co-courant dans le second adsorbeur pendant l'étape d'équilibrage.

6. Procédé suivant la revendication 1, caractérisé en ce que ladite étape finale de la phase (b) s'étend sur toute la durée de cette phase (b).

7. Procédé suivant l'une quelconque des revendications 1 à 6, caractérisé en ce que ladite étape finale de la phase (b) est une étape de pompage à co-courant, ladite pression moyenne étant inférieure à la pression atmosphérique.

8. Procédé suivant la revendication 7, metant en oeuvre au moins trois adsorbeurs, caractérisé en ce que l'on effectue l'étape de pompage de la phase (b) et celle de la phase (c) au moyen de deux pompes distinctes.

9. Procédé suivant la revendication 1, metant en oeuvre au moins quatre adsorbeurs, caractérisé en ce qu'il comprend, à la fin de la phase (a), une étape (a') d'adsorption isobare à la pression haute du cycle dans laquelle seul du gaz extrait d'un autre adsorbeur en cours de phase (b) est admis dans le premier adsorbeur par son extrémité d'entrée et y circule à co-courant, un soutirage étant effectué par son extrémité de sortie.

10. Procédé suivant la revendication 9, caractérisé en ce qu'on introduit dans l'adsorbeur à la pression haute du cycle du mélange à traiter pendant une partie de sa phase (a), avant l'étape (a').

11. Procédé suivant la revendication 10, caractérisé en ce qu'on introduit dans l'adsorbeur à la pression haute du cycle simultanément du mélange à traiter et du gaz extrait d'un autre adsorbeur en cours de phase (b), pendant une partie de sa phase (a) et juste avant son étape (a').

12. Procédé suivant l'une quelconque des revendications 9 à 11, caractérisé en ce que le gaz extrait du premier adsorbeur au cours de l'étape (a') est au moins en partie recyclé vers l'extrémité d'entrée d'un autre adsorbeur pendant une partie de la phase (a) de ce dernier.

13. Procédé suivant l'une quelconque des revendications 1 à 12, caractérisé en ce que la phase de remontée en pression s'effectue au moins partiellement par introduction à contre-courant dans l'adsorbeur de gaz extrait d'une autre adsorbeur au cours de la phase (a) de ce dernier.

14. Procédé suivant l'une quelconque des revendications 1 à 13, caractérisé en ce que la pression haute du cycle est légèrement supérieure à la pression atmosphérique.

## Patentansprüche

1. Verfahren zur Rückgewinnung von mindestens einem bevorugt adsorbierbaren Bestandteil eines Gasgemischs durch PSA-Adsorption (Adsorption nach dem pressure swing adsorpton-Prozeß) bei welchem Verfahren mindestens zwei Adsorber eingesetzt werden und das durch den folgenden Arbeitszyklus gekennzeichnet ist:

(a) eine Adsorptionsphase, umfassend mindestens eine bei zunehmendem Druck ablaufe Anfangsstufe, in deren Verlauf zu behandelndes Gemisch durch in als Einlaßende des Adsorbers bezeichnetes erstes Adsorberende in einen ersten Adsorber geführt wird, und eine bei einem hohen Druck ablaufende isobare Endstufe des Zyklus, in deren Verlauf Gas in den Adsorber durch dessen erstes Ende geführt wird und durch den Adsorber hindurchströmt, wobei eine Entnahme an seinem als Auslaßende bezeichneten anderen Ende erfolgt, welche Strömung nach dem Gleichstromprinzip verläuft;

(b) eine erste Phase der Dekompression des Gleichstrom-Adsorbers bis zu einem Mitteldruck des Zyklus, wobei das im Verlauf eines Endabschnitts dieser Phase (b) aus dem Adsorber abgezogene Gas einen höheren Gehalt an dem genannten Bestandteil hat als das Ausgangsgemisch, aber einen niedrigeren Gehalt an diesem Bestandteil hat als das gewünschte Produktgas, und vollständig an das Einlaßende eines weiteren Adsorbers während mindestens eines Teils der Phase (a) des letzteren rezykliert wird, so daß das dem Adsorber nach dem Gleichstromprinzip in der Phase (a) zugeführte Gas einen mindestens ebenso hohen Gehalt an dem genannten Bestandteil hat wie das genannte Gasgemisch während der gesamten Phase (a) und einen höheren Gehalt als dieses Gemisch während mindestens eines Teils dieser Phase;

(c) eine zweite Phase der Dekompression des Adsorbers im Gegenstrom bis zu einem bis zu einem niederen Druck des Zyklus, wobei das im Verlauf dieser Phase entnommene Gas insgesamt das Produktgas bildet; und gegebenenfals

(d) eine Phase des Wiederanstiegs des Drucks des ersten Adsorbers.

2. Verfahren nach Anspruch 1, dadurch gekennzeichnet, daß die Phase (b) eine Anfangsstufe des Druckausgleichs zwischen dem in Phase (b) arbeitenden Adsorber und einem zweiteh, im Beginn (d) arbeitenden Adsorber umfaßt.

3. Verfahren nach Anspruch 2, dadurch gekennzeichnet, daß das von dem ersten Adsorber abgegebene Gas in den zweiten Adsorber in Gegenstrom während der Ausgleichsphase geführt wird.

4. Verfahren nach Anspruch 2, dadurch gekennzeichnet, daß das von dem ersten Adsorber abgegebene Gas in den zweiten Adsorber nach dem Gleichstromprinzip während der Ausgleichsphase geführt wird.

5. Verfahren nach einem der Ansprüche 1 bis 4, dadurch gekennzeichnet, daß zu behandelndes Gemisch während der Ausgleichsphase nach dem Gleichstromprinzip in den zweiten Adsorber geführt wird.

6. Verfahren nach Anspruch 1, dadurch gekennzeichnet, daß die genannte Endstufe der Phase (b) sich über die gesamte Dauer dieser Phase (b) erstreckt.

7. Verfahren nach einem der Ansprüche 1 bis 4, dadurch gekennzeichnet, daß die genannte Endstufe der Phase (b) eine Gleichstrom-Pumpstufe darstellt, wobei der genannte mittlere Druck niedriger ist als der Atmosphärendruck.

8. Verfahren nach Anspruch 7 unter Anwendung von mindestens drei Adsorbern, dadurch gekennzeichnet, daß für die Pumpstufe der Phase (b) und für die Pumpstufe der Phase (c) zwei unterschiedliche Pumpen vorgesehen sind.

9. Verfahren nach Anspruch 1 unter Anwendung von mindestens view Adsorbern, dadurch gekennzeichnet, daß es am Ende der Phase (a) eine isobare Adsorptionsstufe (a') bei hohem Druck des Zyklus umfaßt, in welcher allein von einem anderen Adsorber im Verlauf der Phase (b) abgezogenes Gas in den ersten Adsorber durch dessen Einlaßende geführt wird und dort nach dem Gleichstromprinzip strömt, wobei eine Entnahme an seinem Auslaßende erfolgt.

10. Verfahren nach Anspruch 9, dadurch gekennzeichnet, daß bei hohem Druck des Zyklus in den Adsorber zu behandelndes Gemisch während eines Abschnitts seiner Phase (a) und vor der Stufe (a') eingeführt wird.

11. Verfahren nach Anspruch 10, dadurch gekennzeichnet, daß bei hohem Druck des Zyklus in den Adsorber gleichzeitig zu behandelndes Gemisch und Gas eingeführt wird, das von einem anderen Adsorber im Verlauf der Phase (b), während eines Abschnitts seiner Phase (a) und kurz von seiner Stufe (a') abgezogen wird.

12. Verfahren nach einem der Ansprüche 9 bis 11, dadurch gekennzeichnet, daß das von dem ersten Adsorber im Verlauf der Stufe (a') abgezogene Gas mindestens teilweise an das Einlaßende eines anderen Adsorbers während eines Abschnitts der Phase (a) des letzteren rezykliert wird.

13. Verfahren nach einem der Ansprüche 9 bis 12, dadurch gekennzeichnet, daß die Druckanstiegsphase mindestens teilweise durch Gegenstromeinführung von Gas in den Adsorber verwirklicht wird, das von einem anderen Adsorber im Verlaufe von Phase (a) des letzteren abgezogen ist.

14. Verfahren nach einem der Ansprüche 9 bis 13, dadurch gekennzeichnet, daß der hohe Druck des Zyklus etwas über dem Atmosphärendruck liegt.

**Claims**

1. A method for recovery, by "PSA" adsorption, of at least one preferentially adsorbable component of a gaseous mixture, this method making use of at least two adsorbers and being characterised by the following operating cycle:

a) an adsorption phase comprising at least one initial stage of rising pressure during which the mixture to be processed is allowed to enter into the first adsorber via a first end, called the inlet end, of the adsorber, and a final isobaric stage at a high pressure of the cycle in the course of which gas is allowed to enter into the adsorber via its first end and flows through the adsorber, a withdrawal being effected via its other end referred to as the outlet end, the direction of flow being referred to as co-current;

b) a first phase of co-current decompression of the adsorber, to an average pressure of the cycle, the gas withdrawn from the adsorber during a final stage of this phase (b) being richer in the said component than the initial mixture but less rich in this component than the required production gas and being wholly recycled to the inlet end of another adsorber during at least a part of the phase (a) of this latter so that the gas allowed to enter co-currently into the adsorber in phase (a) is at least as rich in the said component as the said gaseous mixture throughout the phase (a) and is richer than this mixture during at least part of this phase;

c) a second phase of counter-current decompression of the adsorber, to a low pressure of the cycle, the gas withdrawn during this stage being the whole of the production gas; and if appropriate

d) a phase of pressure restoration of the first adsorber.

2. A method according to claim 1, characterised in that the phase (b) comprises an initial stage of pressure equilibration between the adsorber undergoing this phase (b) and a second adsorber at the beginning of phase (d).

3. A method according to claim 2, characterised in that the gas coming from the first adsorber is allowed to enter the second adsorber in counter-current flow during the equilibration phase.

4. A method according to claim 2, characterised in that the gas coming from the first adsorber is allowed to enter the second adsorber in co-current flow during the equilibration phase.

5. A method according to any one of claims 2 to 4, characterized in that mixture be processed is fed co-currently into the second adsorber during the equilibration stage.

6. A method according to claim 1, characterised in that the said final stage of phase (b) extends throughout the duration of this phase (b).

7. A method according to any one of claims 1 to 6, characterized in that the said final stage of phase (b) is a counter-current pumping stage, the said mean pressure being lower than the atmospheric pressure.

8. A method according to claim 7, making use of at least three adsorbers, characterised in that the pumping stage of phase (b) and that of phase (c) are carried out by means of two separate pumps.

9. A method according to claim 1, making use of at least four adsorbers, characterised in that it comprises, at the end of phase (a), a stage (a') of isobaric adsorption at the high pressure of the cycle, during which only gas withdrawn from another adsorber in the course of phase (b) is allowed to enter the first adsorber via its inlet end and flows co-currently therein, a withdrawal being offered via its outlet end.

10. A method according to claim 9, characterised in that mixture to be processed is fed into the adsorber at the high pressure of the cycle during a part of its phase (a) and before the stage (a').

11. A method according to claim 10, characterised in that mixture to be processed, and gas withdrawn from another adsorber in the course of phase (b), are fed simultaneously in the adsorber at the high pressure of the cycle, during a part of its phase (a) and just before its stage (a').

12. A method according to any one of claims 9 to 11, characterised in that the gas withdrawn from the first adsorber in the course of (a') is at least partly recycled to the inlet end of another adsorber during a part of stage (a) of this latter.

13. A method according to any one of the claims 1 to 12, characterised in that the pressure restoration phase is at least partially implemented by counter-currrent infeed into the adsorber of gas withdrawn from another adsorber during the phase (a) of the latter.

14. A method according to any one of claims 1 to 13, characterised in that the high pressure of the cycle is slightly higher than the atmospheric presssure.

FIG.1

FIG.2

FIG.3

FIG.4

2

FIG.5

FIG.6

FIG.7

FIG.8

FIG.9

FIG.10

FIG.11

FIG.12